# EUROPEAN PATENT APPLICATION

(11) **EP 4 202 717 A1**
(43) Date of publication of application: **28.06.2023**
(21) Application number: 21860890.9
(22) Date of filing: 26.05.2021
(51) Int. Cl.: G06F 16/178, G06F 3/06, G06F 13/10

(54) **INFORMATION PROCESSING DEVICE, INFORMATION PROCESSING METHOD, AND INFORMATION PROCESSING PROGRAM**

(30) Priority: 24.08.2020 JP 2020141269
(71) Applicant: FUJIFILM Corporation, Tokyo 106-8620 (JP)
(72) Inventor: OISHI, Yutaka, Tokyo 106-8620 (JP); KONDO, Michitaka, Tokyo 106-8620 (JP); UNO, Yuko, Tokyo 106-8620 (JP)
(74) Representative: Klunker IP Patentanwälte PartG mbB
(86) International application number: PCT/JP2021/020011
(87) International publication number: WO 2022/044459

(57) **Abstract**

An information processing apparatus refers to a first variable in a case where an object saving instruction is received, sets a second variable to a value indicating that an object is being saved in a case where a state of a saving destination of an object is a normal state, refers to the second variable in a case where a deletion instruction of a saving destination of an object is received, sets the first variable to a value indicating that a state of the saving destination is a deletion start state and then refers to the second variable again in a case where an object is not being saved, responds that deletion of the saving destination is not possible in a case where an object is being saved, and sets the first variable to a value indicating that a state of the saving destination is a deletion-in-progress state in a case where an object is not being saved.

## Description

### BACKGROUND OF THE INVENTION

### 1. Field of the Invention

The present disclosure relates to an information processing apparatus, an information processing method, and an information processing program.

### 2. Description of the Related Art

In related art, an object storage system that handles data as an object is known. In the object storage system, a user designates a bucket that is a saving destination of an object in a case where the object is saved in a storage. The bucket may also be referred to as a container.

As a technique of this type, JP2009-522659A discloses various processing such as creation of a bucket, deletion of a bucket, saving of an object in a bucket, and the like in an object storage system.

### SUMMARY OF THE INVENTION

By the way, in the object storage system, a bucket is created and then an object is saved in the bucket. In addition, in a case of deleting the bucket, after all the objects saved in the bucket are deleted, the bucket is deleted. In a state where there are a plurality of storage nodes that save objects, in a case where bucket deletion processing and object saving processing are simultaneously executed on storage nodes different from each other, a certain storage node is in a state where a bucket is deleted, and the other storage nodes are in a state where an object is saved. In this case, state consistency required for a system may not be maintained.

However, in the technique described in JP2009-522659A, it is not considered that bucket deletion processing and object saving processing are simultaneously executed on nodes different from each other.

The present disclosure has been made in view of the above circumstances, and an object of the present disclosure is to provide an information processing apparatus, an information processing method, and an information processing program capable of maintaining state consistency required for an object storage system even in a case where bucket deletion processing and object saving processing are simultaneously executed.

According to the present disclosure, there is provided an information processing apparatus comprising: at least one processor, in which the processor is configured to refer to a first variable in which a value indicating whether a state of a saving destination of an object is a normal state or a state after a deletion start is stored in a case where an object saving instruction is received, perform processing of setting a second variable in which a value indicating whether or not an object is being saved is stored to a value indicating that an object is being saved and processing of transmitting the object saving instruction to a storage node in a case where the state of the saving destination is a normal state, set the second variable to a value indicating that an object is not being saved after saving of the object in the storage node is completed, and respond that saving of the object is not possible in a case where the state of the saving destination is a state after a deletion start, and refer to the second variable in a case where a deletion instruction of the saving destination is received, respond that deletion of the saving destination is not possible in a case where an object is being saved, set the first variable to a value indicating that the state of the saving destination is a deletion start state and then refer to the second variable again in a case where an object is not being saved, perform processing of responding that deletion of the saving destination is not possible and processing of setting the first variable to a value indicating that the state of the saving destination is a normal state in a case where an object is being saved, and perform processing of setting the first variable to a value indicating that the state of the saving destination is a deletion-in-progress state and processing of transmitting the deletion instruction of the saving destination to the storage node in a case where an object is not being saved.

In the information processing apparatus according to the present disclosure, the processor may be configured to set the first variable to a value indicating that the state of the saving destination is a deletion completion state after processing of transmitting the deletion instruction of the saving destination to the storage node is performed and after deletion of the saving destination is completed in the storage node.

Further, according to the present disclosure, there is provided an information processing method executed by a processor of an information processing apparatus, the method comprising: referring to a first variable in which a value indicating whether a state of a saving destination of an object is a normal state or a state after a deletion start is stored in a case where an object saving instruction is received, performing processing of setting a second variable in which a value indicating whether or not an object is being saved is stored to a value indicating that an object is being saved and processing of transmitting the object saving instruction to a storage node in a case where the state of the saving destination is a normal state, setting the second variable to a value indicating that an object is not being saved after saving of the object in the storage node is completed, and responding that saving of the object is not possible in a case where the state of the saving destination is a state after a deletion start; and referring to the second variable in a case where a deletion instruction of the saving destination is received, responding that deletion of the saving destination is not possible in a case where an object is being saved, setting the first variable to a value indicating that the state of the saving destination is a deletion start state and then referring to the second variable again in a case where an object is not being saved, performing processing of responding that deletion of the saving destination is not possible and processing of setting the first variable to a value indicating that the state of the saving destination is a normal state in a case where an object is being saved, and performing processing of setting the first variable to a value indicating that the state of the saving destination is a deletion-in-progress state and processing of transmitting the deletion instruction of the saving destination to the storage node in a case where an object is not being saved.

Further, according to the present disclosure, there is provided an information processing program for causing a processor of an information processing apparatus to execute a process comprising: referring to a first variable in which a value indicating whether a state of a saving destination of an object is a normal state or a state after a deletion start is stored in a case where an object saving instruction is received, performing processing of setting a second variable in which a value indicating whether or not an object is being saved is stored to a value indicating that an object is being saved and processing of transmitting the object saving instruction to a storage node in a case where the state of the saving destination is a normal state, setting the second variable to a value indicating that an object is not being saved after saving of the object in the storage node is completed, and responding that saving of the object is not possible in a case where the state of the saving destination is a state after a deletion start; and referring to the second variable in a case where a deletion instruction of the saving destination is received, responding that deletion of the saving destination is not possible in a case where an object is being saved, setting the first variable to a value indicating that the state of the saving destination is a deletion start state and then referring to the second variable again in a case where an object is not being saved, performing processing of responding that deletion of the saving destination is not possible and processing of setting the first variable to a value indicating that the state of the saving destination is a normal state in a case where an object is being saved, and performing processing of setting the first variable to a value indicating that the state of the saving destination is a deletion-in-progress state and processing of transmitting the deletion instruction of the saving destination to the storage node in a case where an object is not being saved.

According to the present disclosure, even in a case where bucket deletion processing and object saving processing are simultaneously executed, state consistency required for an object storage system can be maintained.

### BRIEF DESCRIPTION OF THE DRAWINGS

Fig. 1 is a block diagram illustrating an example of a configuration of a recording and reproducing system.
Fig. 2 is a diagram for explaining an object.
Fig. 3 is a block diagram illustrating an example of a hardware configuration of an information processing apparatus.
Fig. 4 is a diagram for explaining an outline of object saving processing.
Fig. 5 is a diagram for explaining an outline of bucket deletion processing.
Fig. 6 is a block diagram illustrating an example of a functional configuration of the information processing apparatus.
Fig. 7 is a flowchart illustrating an example of object saving processing.
Fig. 8 is a flowchart illustrating an example of bucket deletion processing.
Fig. 9 is a diagram for explaining an example of object saving processing.
Fig. 10 is a diagram for explaining an example of object saving processing after start of bucket deletion processing.
Fig. 11 is a diagram for explaining an example of bucket deletion processing.
Fig. 12 is a diagram for explaining an example of bucket deletion processing during execution of object saving processing.
Fig. 13 is a diagram for explaining an example of a case where bucket deletion processing and object saving processing are simultaneously executed.

### DESCRIPTION OF THE PREFERRED EMBODIMENTS

Hereinafter, an example of an embodiment for performing a technique according to the present disclosure will be described in detail with reference to the drawings.

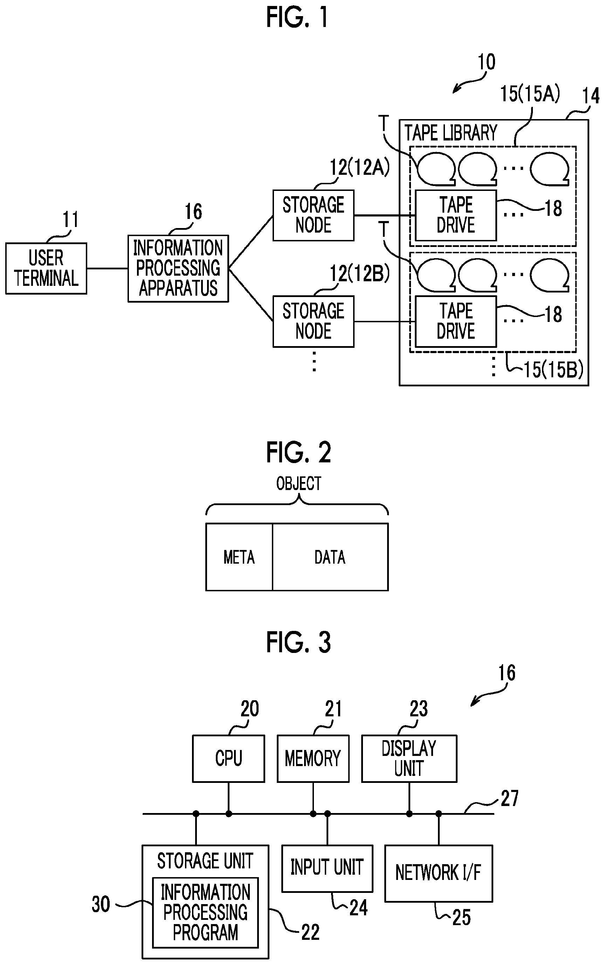

First, a configuration of a recording and reproducing system 10 according to the present embodiment will be described with reference to Fig. 1. As illustrated in Fig. 1, the recording and reproducing system 10 includes a plurality of storage nodes 12, a tape library 14, and an information processing apparatus 16. Each storage node 12 and the information processing apparatus 16 are communicably connected to each other via a network. In the following, in a case of distinguishing each storage node 12, an alphabet is added to an end of the reference numeral, such as the storage node 12A and the storage node 12B. Examples of the storage node 12 and the information processing apparatus 16 include a server computer and the like. In addition, the information processing apparatus 16 is communicably connected to a user terminal 11 via a network. Examples of the user terminal 11 include a personal computer and the like.

The tape library 14 includes a plurality of slots (not illustrated) and a plurality of tape drives 18, and a magnetic tape T as an example of a recording medium is loaded in each slot. Examples of the magnetic tape T include a linear tape-open (LTO) tape.

In a case where the storage node 12 writes or reads data to or from the magnetic tape T, the magnetic tape T as a write target or a read target is loaded from the slot into a predetermined tape drive 18. In a case where data is written or read to and from the magnetic tape T loaded into the tape drive 18, the magnetic tape T is unloaded from the tape drive 18 into the slot in which the magnetic tape T is originally loaded.

Further, the tape library 14 is divided into logical libraries 15 that are a plurality of logical tape libraries. In the following, in a case of distinguishing each logical library 15, an alphabet is added to an end of the reference numeral, such as the logical library 15A and the logical library 15B.

Each logical library 15 includes a plurality of slots and a plurality of tape drives 18. In the present embodiment, a case where the number of slots and the number of tape drives 18 included in each logical library 15 are the same will be described. On the other hand, the number of slots and the number of tape drives 18 included in each logical library 15 may be different from each other. Further, in the present embodiment, a case where the number of the storage nodes 12 and the number of the logical libraries 15 are the same will be described. On the other hand, the number of the storage nodes 12 and the number of the logical libraries 15 may be different from each other.

The storage node 12 and the logical library 15 have a one-to-one correspondence, and each storage node 12 is connected to the tape drive 18 of each of the logical libraries 15 different from each other. Therefore, for example, the storage node 12A can write or read data to or from the magnetic tape T loaded in the slot of the logical library 15A by controlling the tape drive 18 of the logical library 15A to which the storage node 12A is connected. On the other hand, for example, the storage node 12A cannot control the logical library 15B to which the storage node 12A is not connected. Thus, the storage node 12A cannot write or read data to or from the magnetic tape T loaded in the slot of the logical library 15B.

In the present embodiment, as an example, as illustrated in Fig. 2, as a unit for handling data to be recorded in the magnetic tape T, an example of an embodiment in which an object including data to be saved by a user such as document data and image data and metadata related to the data is applied will be described. In the example of Fig. 2, the metadata is referred to as "meta". A storage system that handles the object is called an object storage system. The metadata includes, for example, identification information of an object such as an object key, and attribute information such as an object name, a data size, and a time stamp. The recording order of the data and the metadata when recording the object in the magnetic tape T is not particularly limited, and may be an order of the metadata and the data or an order of the data and the metadata.

Next, a hardware configuration of the information processing apparatus 16 according to the present embodiment will be described with reference to Fig. 3. As illustrated in Fig. 3, the information processing apparatus 16 includes a central processing unit (CPU) 20, a memory 21 as a temporary memory area, and a non-volatile storage unit 22. Further, the information processing apparatus 16 includes a display unit 23 such as a liquid crystal display, an input unit 24 such as a keyboard and a mouse, and a network interface (I/F) 25 connected to a network. The CPU 20, the memory 21, the storage unit 22, the display unit 23, the input unit 24, and the network I/F 25 are connected to a bus 27.

The storage unit 22 is realized by a hard disk drive (HDD), a solid state drive (SSD), a flash memory, or the like. An information processing program 30 is stored in the storage unit 22 as a storage medium. The CPU 20 reads the information processing program 30 from the storage unit 22, develops the read information processing program 30 in the memory 21, and executes the developed information processing program 30.

The user terminal 11 performs various requests such as saving of the object in the recording and reproducing system 10, acquisition of the object from the recording and reproducing system 10, and acquisition of the object list from the recording and reproducing system 10, by using various application programming interfaces (APIs) provided by the recording and reproducing system 10.

In a case of saving an object in the recording and reproducing system 10, the user designates a bucket that is a saving destination of the object by operating the user terminal 11. Here, the bucket means a virtual accommodation area associated with a storage area that is a saving destination of the object. The bucket may also be referred to as a container. The user terminal 11 transmits the object to be saved, identification information of the bucket that is a saving destination, and an object saving instruction to the information processing apparatus 16 according to the operation by the user, for example, by using an API called PutObject.

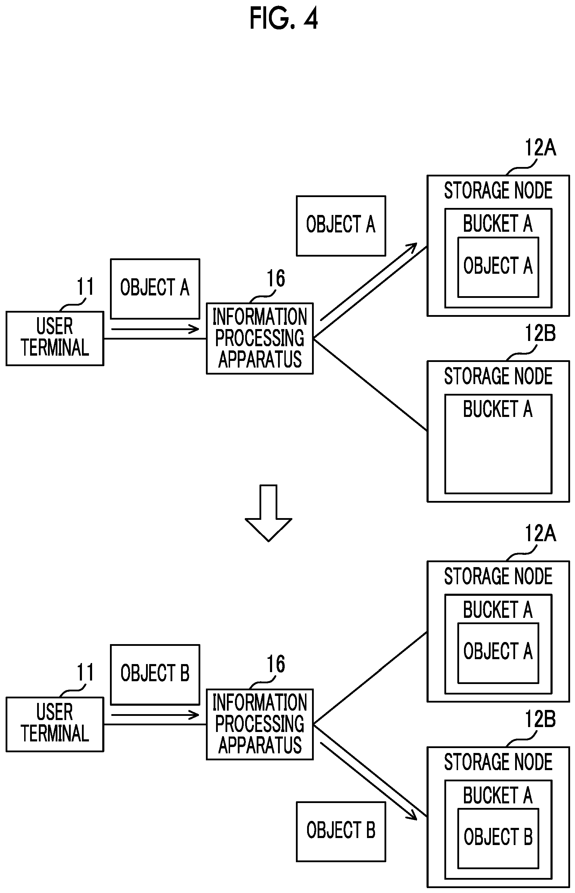

As illustrated in Fig. 4 as an example, in a case where the object saving instruction transmitted from the user terminal 11 is received, the information processing apparatus 16 distributes the object to be saved to one storage node 12. Thereby, the object is saved in a storage area of the storage node 12 corresponding to the bucket. Here, the storage area means, for example, a storage area of the magnetic tape T loaded in the logical library 15 corresponding to the storage node 12. Fig. 4 illustrates an example in which the object A is saved in the storage area of the storage node 12A corresponding to the bucket A and then the object B is saved in the storage area of the storage node 12B corresponding to the bucket A. In addition, a distribution method in which the information processing apparatus 16 distributes the object to be saved to one storage node 12 is not particularly limited. For example, as the distribution method, a DNS round robin method may be applied, or a distribution method based on a hash value of an object key may be applied.

In addition, in a case of deleting a bucket from the recording and reproducing system 10, the user designates a bucket to be deleted by operating the user terminal 11. The user terminal 11 transmits identification information of the bucket to be deleted and a bucket deletion instruction to the information processing apparatus 16 according to an operation by the user, for example, by using an API called a DeleteBucket.

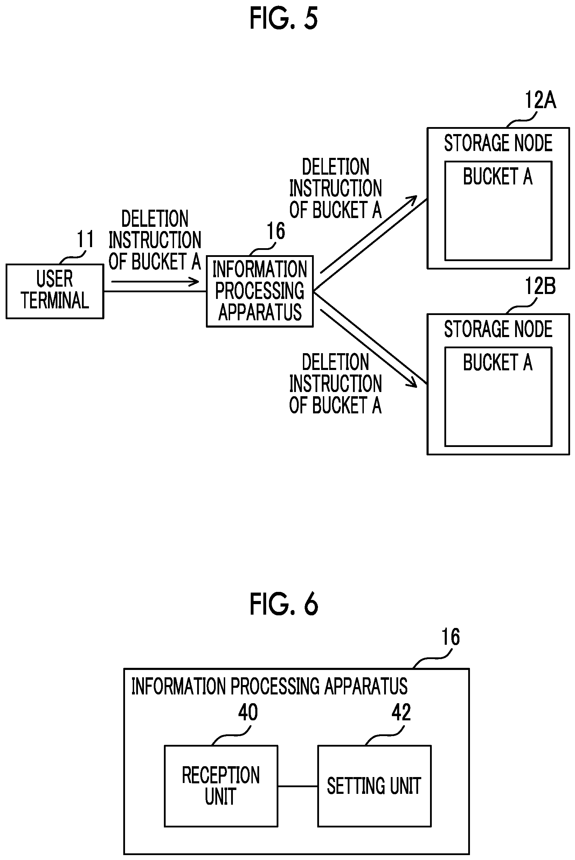

As illustrated in Fig. 5 as an example, in a case where the bucket deletion instruction transmitted from the user terminal 11 is received, the information processing apparatus 16 transmits the bucket deletion instruction to all the storage nodes 12 including a storage area corresponding to the bucket to be deleted. Thereby, the bucket to be deleted is deleted from the recording and reproducing system 10. Here, in the present embodiment, as illustrated in Fig. 5, the bucket cannot be deleted unless the bucket to be deleted is in an empty state, that is, in a state where the object is not saved. Thus, the user deletes all the objects from the bucket to be deleted, and then deletes the bucket by operating the user terminal 11.

On the other hand, the number of users of the recording and reproducing system 10 is not limited to one, and a plurality of users often use a plurality of user terminals 11. In this case, the information processing apparatus 16 may simultaneously receive the bucket deletion instruction and the object saving instruction transmitted from the plurality of user terminals 11. In this case, in a case where the information processing apparatus 16 simultaneously transmits the bucket deletion instruction and the object saving instruction to the storage nodes 12, a certain storage node 12 is in a state where a bucket is deleted, and the other storage nodes 12 are in a state where an object is saved. As a result, state consistency required for a system may not be maintained. The information processing apparatus 16 according to the present embodiment has a function of controlling simultaneous execution of bucket deletion processing and object saving processing.

In order to realize the function, in the storage unit 22, two variables of a bucket status and a PutObject (PO) flag are stored. The bucket status is a variable in which a value indicating whether a state of the bucket is a normal state, a deletion start state, a deletion-in-progress state, or a deletion completion state is stored. The bucket status is an example of a first variable in which a value indicating whether a state of the bucket is a normal state or a state after a deletion start is stored. In the present embodiment, an initial value of the bucket status is a value indicating that a state of the bucket is a normal state.

The PO flag is a variable in which a value indicating whether or not an object is being saved is stored. The PO flag is an example of a second variable in which a value indicating whether or not an object is being saved is stored. In the present embodiment, an initial value of the PO flag is a value indicating that an object is not being saved.

Next, a functional configuration of the information processing apparatus 16 according to the present embodiment will be described with reference to Fig. 6. As illustrated in Fig. 6, the information processing apparatus 16 includes a reception unit 40 and a setting unit 42. In a case where the CPU 20 executes the information processing program 30, the information processing apparatus 16 functions as the reception unit 40 and the setting unit 42.

The reception unit 40 receives the object to be saved, the identification information of the bucket that is a saving destination, and the object saving instruction, which are transmitted from the user terminal 11. In addition, the reception unit 40 receives the identification information of the bucket to be deleted and the bucket deletion instruction, which are transmitted from the user terminal 11.

In a case where the reception unit 40 receives the object saving instruction, the setting unit 42 refers to the bucket status. In a case where the bucket status indicates that a state of the bucket is a normal state, the setting unit 42 performs processing of setting the PO flag to a value indicating that an object is being saved and processing of transmitting the object saving instruction to one storage node 12. At this time, the setting unit 42 transmits, together with the object saving instruction, the object to be saved and the identification information of the bucket that is a saving destination, which are received by the reception unit 40, to one storage node 12. In response to the object saving instruction, the storage node 12 saves the object in a storage area corresponding to the bucket.

In addition, after saving of the object in the storage node 12 is completed, the setting unit 42 sets the PO flag to a value indicating that an object is not being saved.

In addition, the setting unit 42 refers to the bucket status. In a case where the bucket status indicates that a state of the bucket is a state after a deletion start, that is, in a case where a state of the bucket is a deletion start state, a deletion-in-progress state, or a deletion completion state, the setting unit 42 responds to the user terminal 11 that saving of an object is not possible. In response to the response, the user terminal 11 displays a message indicating that saving of an object is not possible.

In addition, in a case where the reception unit 40 receives the bucket deletion instruction, the setting unit 42 refers to the PO flag. In a case where the PO flag indicates that an object is being saved, the setting unit 42 responds to the user terminal 11 that deletion of the bucket is not possible. In response to the response, the user terminal 11 displays a message indicating that deletion of the bucket is not possible.

In addition, the setting unit 42 refers to the PO flag. In a case where the PO flag indicates that an object is not being saved, the setting unit 42 sets the bucket status to a value indicating that a state of the bucket is a deletion start state, and then refers to the PO flag again. The setting unit 42 refers to the PO flag again. In a case where the PO flag indicates that an object is being saved, the setting unit 42 performs processing of responding to the user terminal 11 that deletion of the bucket is not possible and processing of setting the bucket status to a value indicating that a state of the bucket is a normal state.

In addition, the setting unit 42 refers to the PO flag again. In a case where the PO flag indicates that an object is not being saved, the setting unit 42 performs processing of setting the bucket status to a value indicating that a state of the bucket is a deletion-in-progress state and processing of transmitting the bucket deletion instruction to all the storage nodes 12 including a storage area corresponding to the bucket to be deleted. At this time, the setting unit 42 transmits, together with the bucket deletion instruction, the identification information of the bucket to be deleted that is received by the reception unit 40 to the storage nodes 12. In response to the bucket deletion instruction, the storage node 12 deletes the bucket to be deleted. After deletion of the bucket is completed in all the storage nodes 12, the setting unit 42 sets the bucket status to a value indicating that a state of the bucket is a deletion completion state.

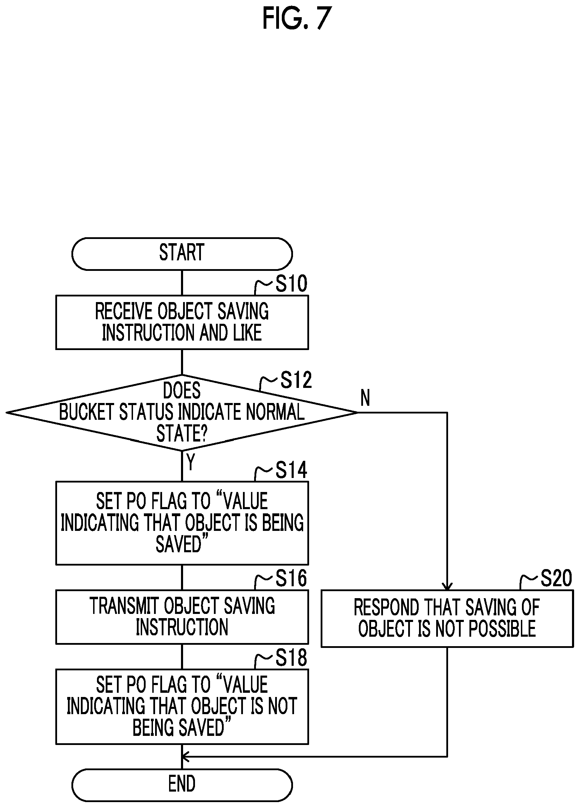

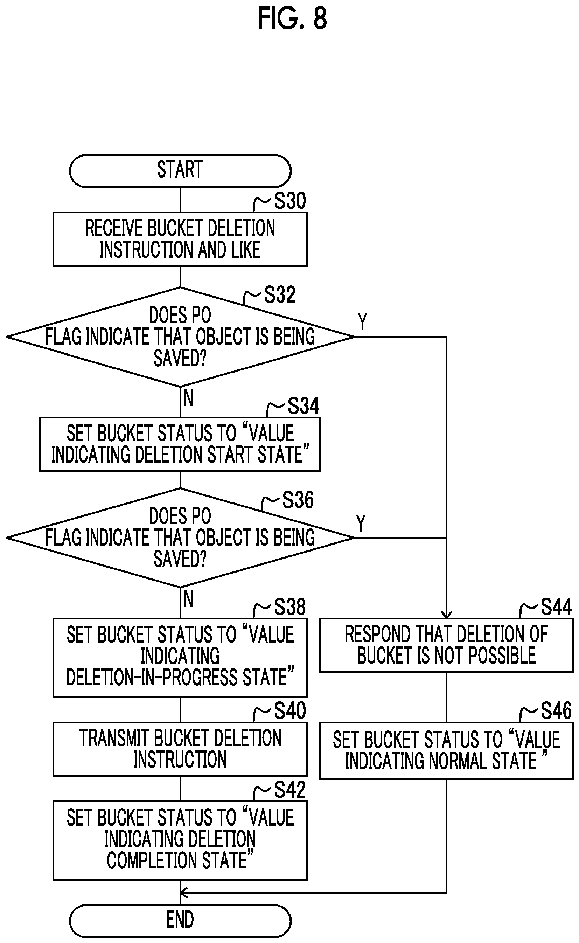

Next, an operation of the information processing apparatus 16 according to the present embodiment will be described with reference to Fig. 7 and Fig. 8. In a case where the CPU 20 executes the information processing program 30, object saving processing illustrated in Fig. 7 and bucket deletion processing illustrated in Fig. 8 are executed. The object saving processing illustrated in Fig. 7 is executed, for example, in a case where the information processing apparatus 16 receives the object saving instruction that is transmitted from the user terminal 11. The bucket deletion processing illustrated in Fig. 8 is executed, for example, in a case where the information processing apparatus 16 receives the bucket deletion instruction that is transmitted from the user terminal 11.

In step S10 of Fig. 7, the reception unit 40 receives the object to be saved, the identification information of the bucket that is a saving destination, and the object saving instruction, which are transmitted from the user terminal 11. In step S12, the setting unit 42 determines whether or not a state of the bucket is a normal state by referring to the bucket status. In a case where a determination result is YES, the process proceeds to step S14.

In step S14, the setting unit 42 sets the PO flag to a value indicating that an object is being saved. In step S16, the setting unit 42 transmits the object saving instruction, the object to be saved, and the identification information of the bucket that is a saving destination, which are received in step S10, to one storage node 12. In step S 18, after saving of the object transmitted in step S16 is completed in the storage node 12, the setting unit 42 sets the PO flag to a value indicating that an object is not being saved. In a case where processing of step S18 is completed, object saving processing is completed.

On the other hand, in step S12, in a case where a state of the bucket is a deletion start state, a deletion-in-progress state, or a deletion completion state, a determination result in step S12 is NO, and the process proceeds to step S20. In step S20, the setting unit 42 responds to the user terminal 11 that saving of an object is not possible. In a case where processing of step S20 is completed, object saving processing is completed.

In step S30 of Fig. 8, the reception unit 40 receives the identification information of the bucket to be deleted and the bucket deletion instruction, which are transmitted from the user terminal 11. In step S32, the setting unit 42 determines whether or not an object is being saved by referring to the PO flag. In a case where a determination result in step S32 is NO, the process proceeds to step S34.

In step S34, the setting unit 42 sets the bucket status to a value indicating that a state of the bucket is a deletion start state. In step S36, the setting unit 42 determines whether or not an object is being saved by referring to the PO flag. In a case where a determination result in step S36 is NO, the process proceeds to step S38.

In step S38, the setting unit 42 sets the bucket status to a value indicating that a state of the bucket is a deletion-in-progress state. In step S40, the setting unit 42 transmits the bucket deletion instruction and the identification information of the bucket to be deleted, to all the storage nodes 12 including a storage area corresponding to the bucket to be deleted that is received in step S30.

In step S42, after the bucket to be deleted is deleted in all the storage nodes 12 according to the bucket deletion instruction transmitted in step S40, the setting unit 42 sets the bucket status to a value indicating that a state of the bucket is a deletion completion state. In a case where processing of step S42 is completed, bucket deletion processing is completed.

On the other hand, in a case where a determination result in step S32 is YES, the process proceeds to step S44. In addition, even in a case where a determination result in step S36 is YES, the process proceeds to step S44. In step S44, the setting unit 42 responds to the user terminal 11 that deletion of the bucket is not possible.

In step S46, the setting unit 42 sets the bucket status to a value indicating that a state of the bucket is a normal state. In step S46, the setting unit 42 refers to the bucket status. Only in a case where a state of the bucket is a deletion start state, a deletion-in-progress state, or a deletion completion state, the setting unit 42 may set the bucket status to a value indicating that a state of the bucket is a normal state. In a case where processing of step S46 is completed, bucket deletion processing is completed.

In a case where the bucket deletion instruction is received and the bucket to be deleted is not empty, that is, in a case where an object is stored in a storage area of at least one storage node 12 that corresponds to the bucket, the bucket is not empty. Thus, the information processing apparatus 16 responds to the user terminal 11 that deletion of the bucket is not possible.

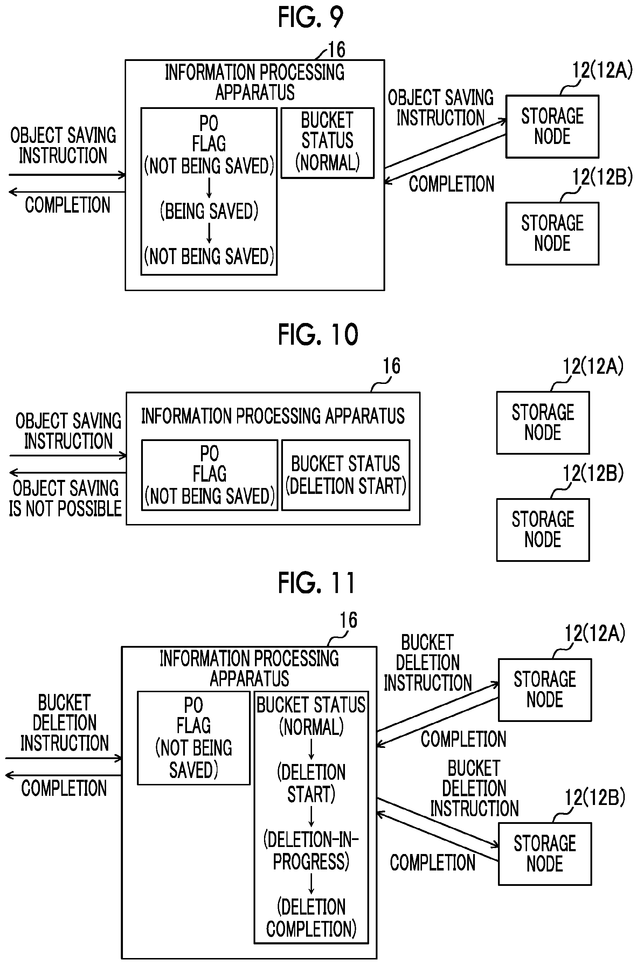

Next, specific examples of the object saving processing and the bucket deletion processing will be described. Here, for the sake of easy explanation, a case where two storage nodes 12 are provided will be described as an example. A case where the information processing apparatus 16 receives only the object saving instruction among the object saving instruction and the bucket deletion instruction will be described with reference to Fig. 9.

As illustrated in Fig. 9, the information processing apparatus 16 receives the object saving instruction. In the example of Fig. 9, since the information processing apparatus 16 does not receive the bucket deletion instruction, the bucket status is set to a value indicating that a state of the bucket is a normal state. Therefore, a determination result in step S12 of Fig. 7 is YES, and in step S14, the information processing apparatus 16 sets the PO flag to a value indicating that an object is being saved. Next, in step S16, the information processing apparatus 16 transmits the object saving instruction, the object to be saved, and the identification information of the bucket that is a saving destination, to one storage node 12 (in the example of Fig. 9, the storage node 12A).

In a case where saving of the object in the storage node 12A is completed, in step S18, the information processing apparatus 16 sets the PO flag to a value indicating that an object is not being saved. In addition, the information processing apparatus 16 responds to the user terminal 11 that the saving of the object is completed.

A case where the information processing apparatus 16 receives the object saving instruction after bucket deletion processing is started will be described with reference to Fig. 10. As illustrated in Fig. 10, the information processing apparatus 16 receives the object saving instruction. In the example of Fig. 10, since the information processing apparatus 16 starts bucket deletion processing, the bucket status is set to a value indicating that a state of the bucket is a deletion start state. Therefore, a determination result in step S12 of Fig. 7 is NO, and in step S20, the information processing apparatus 16 responds to the user terminal 11 that saving of the object is not possible. Fig. 10 illustrates an example in which the bucket status is set to a value indicating that a state of the bucket is a deletion start state. On the other hand, the same applies in a case where the bucket status is set to a value indicating that a state of the bucket is a deletion-in-progress state or a deletion completion state.

A case where the information processing apparatus 16 receives only the bucket deletion instruction among the object saving instruction and the bucket deletion instruction will be described with reference to Fig. 11. As illustrated in Fig. 11, the information processing apparatus 16 receives the bucket deletion instruction. In the example of Fig. 11, since the information processing apparatus 16 does not receive the object saving instruction, the PO flag is set to a value indicating that an object is not being saved. Therefore, a determination result in step S32 of Fig. 8 is NO, and in step S34, the information processing apparatus 16 sets the bucket status to a value indicating that a state of the bucket is a deletion start state.

After execution of step S34, the information processing apparatus 16 refers to the bucket status again. Even in this case, since the information processing apparatus 16 does not receive the object saving instruction, the PO flag is set to a value indicating that an object is not being saved. Therefore, a determination result in step S36 of Fig. 8 is NO, and in step S38, the information processing apparatus 16 sets the bucket status to a value indicating that a state of the bucket is a deletion-in-progress state. After execution of step S38, in step S40, the information processing apparatus 16 transmits the bucket deletion instruction and the identification information of the bucket to be deleted, to all the storage nodes 12 including a storage area corresponding to the bucket to be deleted.

After bucket deletion is completed on all the storage nodes 12, in step S42, the information processing apparatus 16 sets the bucket status to a value indicating that a state of the bucket is a deletion completion state. In addition, the information processing apparatus 16 responds to the user terminal 11 that deletion of the bucket is completed.

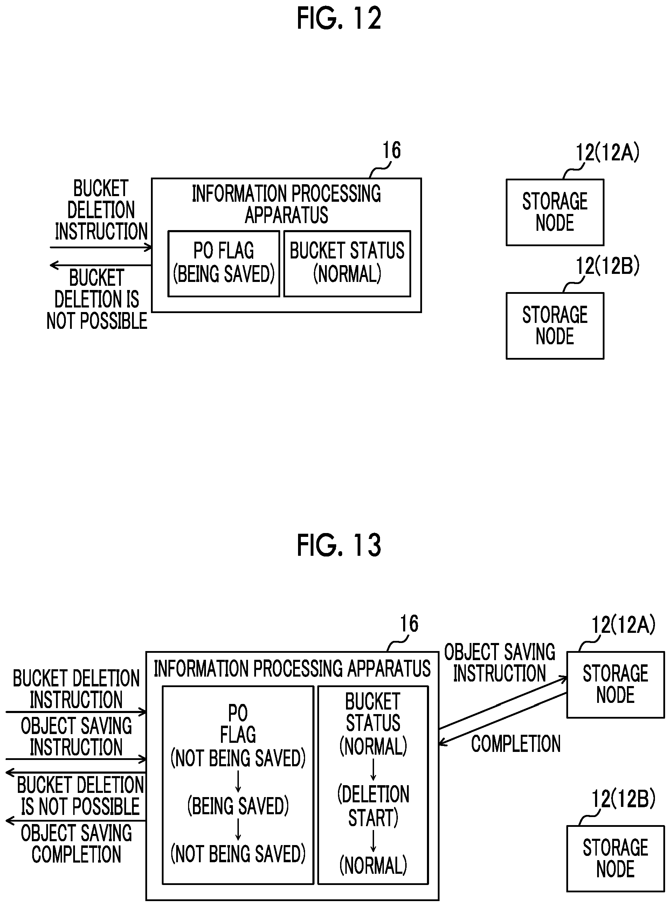

A case where the information processing apparatus 16 receives the bucket deletion instruction during execution of object saving processing will be described with reference to Fig. 12. As illustrated in Fig. 12, the information processing apparatus 16 receives the bucket deletion instruction. In the example of Fig. 12, since the information processing apparatus 16 is in execution of object saving processing, the PO flag is set to a value indicating that an object is being saved by processing of step S14 of Fig. 7. Therefore, a determination result in step S32 of Fig. 8 is YES, and in step S44, the information processing apparatus 16 responds to the user terminal 11 that deletion of the bucket is not possible.

A case where the information processing apparatus 16 simultaneously receives the object saving instruction and the bucket deletion instruction will be described with reference to Fig. 13. As illustrated in Fig. 13, the information processing apparatus 16 receives the object saving instruction and the bucket deletion instruction. At a timing when the information processing apparatus 16 receives the object saving instruction, the bucket deletion instruction is also received. Thus, the bucket status is set to a value indicating that a state of the bucket is a normal state. Therefore, a determination result in step S12 of Fig. 7 is YES.

In addition, at a timing when the information processing apparatus 16 receives the bucket deletion instruction, the object saving instruction is also received. Thus, the PO flag is set to a value indicating that an object is not being saved. Therefore, a determination result in step S32 of Fig. 8 is NO.

Next, in step S14 of Fig. 7, the information processing apparatus 16 sets the PO flag to a value indicating that an object is being saved. Next, in step S16, the information processing apparatus 16 transmits the object saving instruction, the object to be saved, and the identification information of the bucket that is a saving destination, to one storage node 12 (in the example of Fig. 13, the storage node 12A).

On the other hand, simultaneously with step S14 of Fig. 7, in step S34 of Fig. 8, the information processing apparatus 16 sets the bucket status to a value indicating that a state of the bucket is a deletion start state. After execution of step S34, the information processing apparatus 16 refers to the bucket status again. At this time, the PO flag is set to a value indicating that an object is being saved by processing of step S14 of Fig. 7. Therefore, a determination result in step S36 of Fig. 8 is YES, and in step S44, the information processing apparatus 16 responds to the user terminal 11 that deletion of the bucket is not possible. In addition, in step S46, the information processing apparatus 16 sets the bucket status to a value indicating that a state of the bucket is a normal state.

Further, after step S16, in a case where saving of the object in the storage node 12A is completed, in step S18, the information processing apparatus 16 sets the PO flag to a value indicating that an object is not being saved. In addition, the information processing apparatus 16 responds to the user terminal 11 that the saving of the object is completed.

As described above, according to the present embodiment, even in a case where the bucket deletion processing and the object saving processing are simultaneously executed, state consistency required for an object storage system can be maintained.

In the embodiment, the case where one information processing apparatus 16 is provided has been described. On the other hand, the present disclosure is not limited thereto. For example, a plurality of information processing apparatuses 16 may be provided. In this case, a form in which the bucket status and the PO flag are stored in a shared storage area on which reading and writing can be performed by all the information processing apparatus 16 is exemplified.

Further, in the embodiment, for example, as a hardware structure of processing unit that executes various processing such as the reception unit 40 and the setting unit 42, the following various processors may be used. The various processors include, as described above, a CPU, which is a general-purpose processor that functions as various processing units by executing software (program), and a dedicated electric circuit, which is a processor having a circuit configuration specifically designed to execute a specific processing, such as a programmable logic device (PLD) or an application specific integrated circuit (ASIC) that is a processor of which the circuit configuration may be changed after manufacturing such as a field programmable gate array (FPGA).

One processing unit may be configured by one of these various processors, or may be configured by a combination of two or more processors of the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

Further, in the embodiment, an example in which the information processing program 30 is stored (installed) in the storage unit 22 in advance has been described. On the other hand, the present disclosure is not limited thereto. The information processing program 30 may be provided by being recorded in a recording medium such as a compact disc read only memory (CD-ROM), a digital versatile disc read only memory (DVD-ROM), or a Universal Serial Bus (USB) memory. Further, the information processing program 30 may be downloaded from an external apparatus via a network.

In the disclosure of Japanese Patent Application No. 2020-141269, filed August 24, 2020, the entire contents of which are incorporated herein by reference. Further, all documents, patent applications, and technical standards mentioned in this specification are incorporated herein by reference to the same extent as in a case where each document, each patent application, and each technical standard are specifically and individually described by being incorporated by reference.

## Claims

1. An information processing apparatus comprising:
at least one processor,
wherein the processor is configured to
refer to a first variable in which a value indicating whether a state of a saving destination of an object is a normal state or a state after a deletion start is stored in a case where an object saving instruction is received, perform processing of setting a second variable in which a value indicating whether or not an object is being saved is stored to a value indicating that an object is being saved and processing of transmitting the object saving instruction to a storage node in a case where the state of the saving destination is a normal state, set the second variable to a value indicating that an object is not being saved after saving of the object in the storage node is completed, and respond that saving of the object is not possible in a case where the state of the saving destination is a state after a deletion start, and
refer to the second variable in a case where a deletion instruction of the saving destination is received, respond that deletion of the saving destination is not possible in a case where an object is being saved, set the first variable to a value indicating that the state of the saving destination is a deletion start state and then refer to the second variable again in a case where an object is not being saved, perform processing of responding that deletion of the saving destination is not possible and processing of setting the first variable to a value indicating that the state of the saving destination is a normal state in a case where an object is being saved, and perform processing of setting the first variable to a value indicating that the state of the saving destination is a deletion-in-progress state and processing of transmitting the deletion instruction of the saving destination to the storage node in a case where an object is not being saved.

2. The information processing apparatus according to claim 1,
wherein the processor is configured to set the first variable to a value indicating that the state of the saving destination is a deletion completion state after processing of transmitting the deletion instruction of the saving destination to the storage node is performed and after deletion of the saving destination is completed in the storage node.

3. An information processing method executed by a processor of an information processing apparatus, the method comprising:
referring to a first variable in which a value indicating whether a state of a saving destination of an object is a normal state or a state after a deletion start is stored in a case where an object saving instruction is received, performing processing of setting a second variable in which a value indicating whether or not an object is being saved is stored to a value indicating that an object is being saved and processing of transmitting the object saving instruction to a storage node in a case where the state of the saving destination is a normal state, setting the second variable to a value indicating that an object is not being saved after saving of the object in the storage node is completed, and responding that saving of the object is not possible in a case where the state of the saving destination is a state after a deletion start; and
referring to the second variable in a case where a deletion instruction of the saving destination is received, responding that deletion of the saving destination is not possible in a case where an object is being saved, setting the first variable to a value indicating that the state of the saving destination is a deletion start state and then referring to the second variable again in a case where an object is not being saved, performing processing of responding that deletion of the saving destination is not possible and processing of setting the first variable to a value indicating that the state of the saving destination is a normal state in a case where an object is being saved, and performing processing of setting the first variable to a value indicating that the state of the saving destination is a deletion-in-progress state and processing of transmitting the deletion instruction of the saving destination to the storage node in a case where an object is not being saved.

4. An information processing program for causing a processor of an information processing apparatus to execute a process comprising:
referring to a first variable in which a value indicating whether a state of a saving destination of an object is a normal state or a state after a deletion start is stored in a case where an object saving instruction is received, performing processing of setting a second variable in which a value indicating whether or not an object is being saved is stored to a value indicating that an object is being saved and processing of transmitting the object saving instruction to a storage node in a case where the state of the saving destination is a normal state, setting the second variable to a value indicating that an object is not being saved after saving of the object in the storage node is completed, and responding that saving of the object is not possible in a case where the state of the saving destination is a state after a deletion start; and
referring to the second variable in a case where a deletion instruction of the saving destination is received, responding that deletion of the saving destination is not possible in a case where an object is being saved, setting the first variable to a value indicating that the state of the saving destination is a deletion start state and then referring to the second variable again in a case where an object is not being saved, performing processing of responding that deletion of the saving destination is not possible and processing of setting the first variable to a value indicating that the state of the saving destination is a normal state in a case where an object is being saved, and performing processing of setting the first variable to a value indicating that the state of the saving destination is a deletion-in-progress state and processing of transmitting the deletion instruction of the saving destination to the storage node in a case where an object is not being saved.
